# EUROPEAN PATENT APPLICATION

(11) **EP 0 806 577 A1**
(43) Date of publication of application: **12.11.1997**
(21) Application number: 97107363.0
(22) Date of filing: 05.05.1997
(51) Int. Cl.: F16C 11/06, B60Q 1/068

(54) **Connection element for a spherical head of a control member of a reflector for headlights for motor vehicles**

(30) Priority: 07.05.1996 IT TO960366
(71) Applicant: MAGNETI MARELLI S.p.A., 20145 Milano (IT)
(72) Inventor: Toso, Roberto, 10040 Druento (IT); Vagliera, Cristiano, 10093 Collegno (IT); Cavanero, Davide, 10028 Trofarello (IT)
(74) Representative: Plebani, Rinaldo

(57) **Abstract**

Connection element (4) for a spherical head (18) of a control member for the reflector (1) of a headlight, which is constituted by a block of plastic provided with a housing for the spherical head (18) and with a fixing end-piece, and is capable of being introduced with permanent locking into a seat of the reflector (1); the housing (17) is formed by a hemispherical seat surrounded by a plurality of elastic retention tabs (2) which are arranged in a ring around the seat and are capable of closing around the spherical seat when the block with the spherical head (18) inserted is introduced into the seat (3) of the reflector; the fixing end-piece bears at one end two pairs of hook-shaped elastic hooking tabs (12,14) which are opened out laterally in pairs and are of different length alternately in pairs; the pair of longer tabs (14) is used to hook the block to an edge of the seat (3) on the reflector (1) to prevent the block itself slipping out during pre-assembly; the pair of shorter tabs (12) acts to hook the block stably and permanently to the edge of the seat (3) after the block itself has been introduced completely with the spherical head (18) inserted in its own housing; the retention tabs end in a free end which is bent outwards in such a manner that, when the block is inserted into the seat (3) of the reflector (1), the bent end interferes with the seat (3) causing bending of the tabs inwards, which close in the spherical head (18), preventing slipping out.

## Description

The present invention relates to a connection element for a spherical head of a control member of a reflector for a headlight for motor vehicles, and more specifically to a connection element which can be inserted into a seat of the reflector and is capable of accommodating the spherical head of the member for control of the angular attitude of the reflector.

At present, according to the known art, reflectors of headlights for motor vehicles have mounted on them and fixed with screws a block of plastic provided with a spherical housing which has in other words an angular extension only slightly greater than 180°, into which, when the headlight is assembled, is inserted by snap insertion, the spherical head of the member for control of the orientation of the reflector, which is usually constituted by an arm which at one end ends in the spherical head and at the opposite end is connected to an orientation mechanism; to facilitate the insertion of the spherical head, the housing has an entrance edge provided with a number of radial notches which allow limited elastic deformation to make possible the passage of the spherical head.

This connection system, so as not to make too difficult the snap insertion of the spherical head into its housing, must be made with considerable elasticity, as a result of which it has the shortcoming that the spherical head can slip out of the housing as a result of the elastic edge yielding, or as a result of abnormal stresses applied to the reflector; furthermore, the fixing of the block with screws requires a cost increase as a result of both the greater time required for assembly and the greater number of components used.

The aim of the present invention, therefore, is to produce a connection device for the spherical head of the control member for the reflector without the shortcomings which the current known connection systems have; in particular, the aims of the invention are to provide a connection member which is capable of being mounted on the reflector in a simple and rapid manner, which has limited axial assembly and insertion loads for the spherical head of the control member of the reflector, and which is capable of preventing the spherical head slipping out of its housing.

According to the invention, a device is provided for the connection of a spherical head of a control member for a reflector of a headlight for vehicles, comprising a connection member provided with a blind housing which is constituted by a hemispherical cavity and is capable of accommodating said spherical head, and means for fixing the connection member to the reflector, characterized in that said fixing means comprise a housing seat for the connection member which is borne in an integral manner by said reflector and an end-piece which is joined in one piece to a body of said member provided with said hemispherical cavity and is equipped with snap-fixing members capable of locking said connection member in said seat.

The present invention will now be further described by means of a practical embodiment which is purely exemplary and absolutely non-limiting, with reference to the figures of the attached drawing, in which:
Figure 1 shows a partially sectioned perspective view of a connection member according to the invention,
Figure 2 shows in axial section a lateral view of the connection device according to the invention, as it appears at a pre-assembly stage on the reflector,
Figure 3 shows in axial section a lateral view rotated through 90° of the device in Figure 2 illustrated in the same pre-assembly position,
Figure 4 shows the device in Figure 2 in a final assembly position, and
Figure 5 shows the device in Figure 3 in a final assembly position.

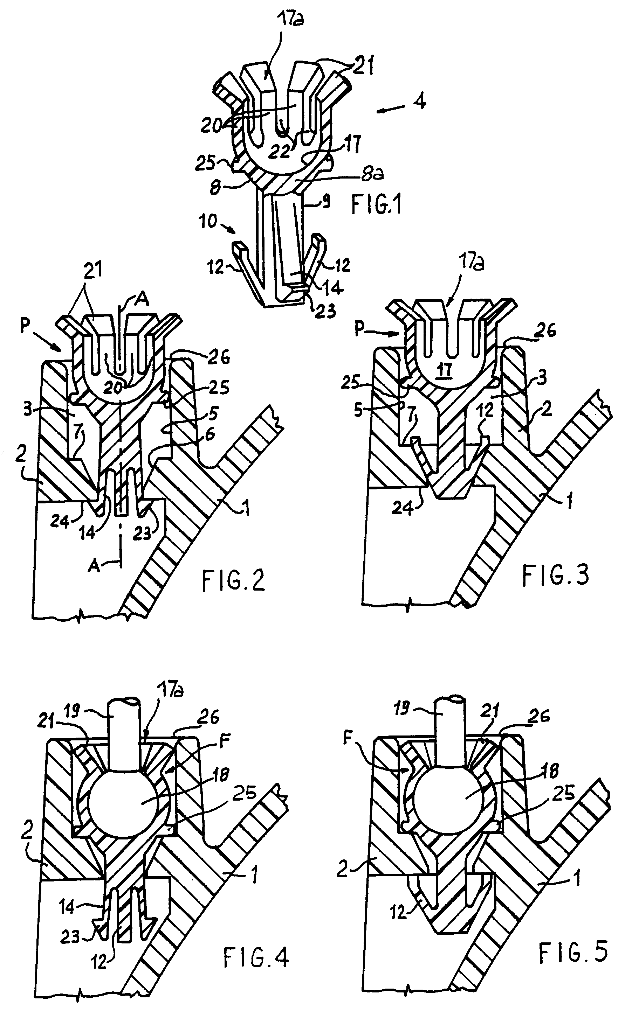

With reference to Figures 2 to 4, 1 indicates a portion of a reflector of a vehicle headlight, which is not shown in its entirety, typically for automobile use; the portion 1 bears in a projecting manner a connection arm 2, in which a seat 3 is formed which is capable of accommodating a connection member or element 4 which is shown on its own in a perspective view in Figure 1; the seat 3 is formed by a cylindrical cavity 5 which is open at one end and communicates, at the opposite end, with a through-opening 6 which is made through a bottom wall 7 of the cavity 5 and flared towards the inside of the latter.

The cavity 5 is capable of receiving an enlarged main body 8 (Figure 1) of the element or member 4, while the opening 6 is intended to accommodate an end-piece 9 of the member 4, which extends at the rear in a projecting manner from the body 8 and bears snap-fixing members 10 which are constituted by at least two pairs of elastic hooking tabs 12 and 14 which are opened out in relation to the end-piece 9 so as to form together with the latter two V-shaped anchors arranged parallel to two mutually orthogonal planes.

The connection element or member 4 is constituted by a single piece or block made of an injection-moulded polymeric resin, preferably with a low coefficient of friction, of elongate shape, in which the main part or body 8 bears a blind hemispherical housing 17 which is capable of receiving from the side opposite the end-piece 9 a known spherical head 18 (Figures 4, 5) of a control member for the reflector 1, which is fixed at the end of a rod 19 in turn connected to a device for controlling the orientation of the reflector 1, which is of a known type and, for the sake of simplicity, is not shown in the drawings.

The hemispherical housing 17 is formed inside a portion of the body 8 defined by a plurality of elastic retention tabs 20 which are integral with their root end with a solid round base 8a of the body 8 (Figure 1) and have another, opposite end 21 which extends freely in a projecting manner from the base 8a and is bent partially through roughly 90° towards the outside; the tabs 20 are separated from each other by radial cuts 22 and are arranged in a ring around the housing 17 and equally angularly spaced in relation to one another so that all the ends 21 define a funnel-shaped mouth 17a for the sphere 18.

At rest (Figures 1, 2 and 3), the tabs have an essentially rectilinear shape and extend essentially parallel to the longitudinal axis A-A of the element 4, thus providing the housing 17 with an internal shape delimited, starting from the mouth 17a, by an essentially cylindrical lateral surface, and of a diameter which is equal to or slightly greater than that of the spherical head 18 to be accommodated. In this manner, as will be seen, at the pre-assembly stage, the head 18 is free to be inserted without any force into the seat or housing 17 through the mouth 17a.

The tabs 12 of the pair forming the first V-shaped hooking anchor each comprise an inclined arm which extends at the side of the end-piece 9, oriented in the opposite direction in relation to the direction of insertion of the element 4 into the seat 3 and, as will be seen, are used to lock the element 4 permanently in the seat 3 after having been introduced completely into it.

The tabs 14 of the pair forming the second V-shaped hooking anchor, arranged at 90° in relation to the first, extend essentially parallel to the axis A-A and each have a stop tooth 23 which is arranged axially further forward (in the direction of introduction into the opening 6) and is capable of being hooked to an external edge 24 of the opening 6 to prevent the element 4 slipping out of the seat 3 at the pre-assembly stage; in fact, the length of the tabs 14 is dimensioned in such a manner that the teeth 23 can be hooked to the edge 24 when the element 4 is inserted only partially into the seat 3 (Figures 2 and 3), with the tabs 12 supported with gentle force on the flared surface of the opening 6 so as to create a certain resistance to further insertion of the element 4.

In use, the hooking device according to the invention is mounted on the reflector 1 in a pre-assembly position, indicated by "P" in Figure 2, inserting the element 4 partially inside the seat 3 until the end-piece 9 is introduced partially into the hole 6 to make the teeth 23 snap over the edge 24. By keeping the element 4 in this position, in which it is only partially introduced into the seat 3, and the retention tabs 20 are still located outside the cavity 5, it is possible then to insert the spherical head into the housing 17 without exerting any thrust on the element 4 because the tabs 20 are at rest and do not constitute any interference to the advance of the head 18.

The insertion of the spherical head 18 is further facilitated, to the extent that it is possible to carry it out using automated systems, by virtue of the fact that the element 4 is kept centred in the cavity 5 by an annular flange 25 of a diameter which is approximately equal to that of the cavity itself and formed on the base part 8a of the body 8 in the region of the bottom of the housing 17.

After the spherical head 18 is arranged fully in the housing 17, a further advance of the same in the direction of insertion of the element 4 into the seat 3 makes it possible to introduce the element 4 completely into its own seat 3 by applying an axial thrust to the spherical head 18 which is sufficient simply to bend the tabs 12 in the direction towards the end-piece 9 so as to make the edge 24 snap over them as well in order to bring the element 4 into the final assembly position shown in Figures 4 and 5; during this final introduction movement, moreover, the retention tabs 20 are bent elastically inwards, through the action of the bent ends 21 which are dimensioned in such a manner that the flared mouth 17a has an external diameter which is greater than the internal diameter of an introduction edge 26 of the cavity 5; consequently, when the body 8 enters inside the cavity 5, the tabs 20 are bent until the internal diameter of the mouth 17a is reduced to a value which is smaller than the diameter of the spherical head 18, consequently closing the latter in on the rear side and producing in this manner a closed spherical joint.

At the same time, the locking tabs 12, once they have passed the edge 24, spread into the opened out position again (position "F" in Figures 4 and 5), in which the flange 25, which in this position acts as a stop shoulder, is forced against the bottom wall 7 of the cavity 3.

As long as the connection element 4 is kept in the pre-assembly position P (Figure 2), it is possible to extract the spherical head from the housing 17; after complete insertion of the element 4 into its seat 3, however, particularly when the tabs 12 have opened out, it is no longer possible to extract the element 4 or the spherical head 18 by applying traction to the rod 19; in order to be able to extract only the spherical head 18, or both the spherical head and the element 4 from their seats, it is necessary to use a tool which acts, to squeeze them together, firstly on the tabs 12 in order to extract only the spherical head 18, and also on the tabs 14 in order to extract the element 4 as well.

## Claims

1. Device for the connection of a spherical head (18) of a control member for a reflector (1) of a headlight for vehicles, comprising a connection member (4) provided with a blind housing which is constituted by a hemispherical cavity (17) and is capable of accommodating said spherical head (18), and means for fixing the connection member (4) to the reflector, characterized in that said fixing means comprise a housing seat (3, 5, 6) for the connection member (4) which is borne in an integral manner by said reflector (1) and an end-piece (9) which is joined in one piece to a body (8) of said member (4) provided with said hemispherical cavity (17) and is equipped with snap-fixing members capable of locking said connection member (4) in said seat (3, 5, 6).

2. Device according to Claim 1, characterized in that said housing (17) constituted by a hemispherical cavity is delimited by a plurality of elastic retention tabs (20) which are arranged in a ring on said body (8) of the connection member (4) to define, at rest, an internal lateral wall of said hemispherical cavity (17) which is essentially cylindrical and of a diameter equal to or greater than that of said spherical head (18), said tabs (20) being provided with an externally bent free end (21) which is capable of interacting with an edge (26) of said seat (3) to bend elastically said tabs (20) around said spherical head (18) when said member (4) is inserted into said seat (3) of the reflector (1) so as to close on said spherical head a mouth (17a) of said cavity (17) to a diameter which is smaller than that of the spherical head (18).

3. Connection device according to Claim 1 or 2, characterized in that said fixing members (10) comprise at least two pairs of hooking tabs (12, 14) which are capable of selectively retaining said connection member (4) in said seat (3) in a first (F) and in a second (P) of two alternative relative positions of said member (4) in relation to said seat (3).

4. Connection device according to Claim 3, characterized in that said hooking tabs (12) of a first pair each comprise an elastic arm which is inclined laterally in relation to said end-piece (9) and oriented in the opposite direction to the direction of insertion of said element (4) into said seat (3) so as to define a first V-shaped snap-type stop anchor capable of locking said member (4) permanently in said seat (3) after it has been completely introduced into said seat (3).

5. Connection device according to Claim 4, characterized in that said elastic arms are capable of being opened out laterally outside a bottom wall (7) of said seat (3) when said member (4) is arranged in said first position (F), completely inserted into said seat (3), to prevent the extraction of said member (4) from said seat (3).

6. Connection device according to Claim 5, characterized in that said connection member (4) comprises an annular stop flange (25) which is capable of positioning said member (4) in said first position (F) when said flange is forced against said bottom wall (7) inside said seat (3).

7. Connection device according to one of Claims 3 to 6, characterized in that said hooking tabs (14) of a second pair extend essentially parallel to said axis (A-A) on the side opposite said housing (17) and have a stop tooth (23) which is capable of being hooked to an external edge (24) of said seat (3) before said tabs (12) of the first pair to prevent said member (4) slipping out of said seat (3) when it is arranged in said second position (P), partially outside said seat (3).

8. Connection device according to one of the preceding claims, characterized in that said seat (3) comprises a cylindrical cavity (5) which is capable of accommodating said main body (8) of the connection member (4) and a flared opening (6), on the axis of and adjacent to said cavity, which is capable of accommodating said end-piece (9) and of interacting with said fixing members (10) to retain said member (4) in said cavity (5).

9. Connection member (4) for a spherical head (18) of a control member for a reflector (1) of a headlight for vehicles, comprising a body (8) provided on its inside with a hemispherical seat (17) for said head (18), characterized in that it also comprises an end-piece (9) joined in one piece to said body (8) and equipped with snap-fixing members which consist of at least two pairs of hooking tabs (12, 14) which form two V-shaped snap-hooking anchors arranged parallel to planes which are mutually orthogonal and in different axial positions in the direction of introduction of the connection member into a seat for the same.
